Europäisches Patentamt

**European Patent Office**

**Office européen des brevets**

(11) Numéro de publication: **0 246 133**
**B1**

(12) **FASCICULE DE BREVET EUROPÉEN**

(45) Date de publication du fascicule du brevet:
06.12.89

(51) Int. Cl.⁴: **B 60 G 3/26**

(21) Numéro de dépôt: 87400972.3

(22) Date de dépôt: 28.04.87

(54) Train arrière pour suspension de véhicules automobiles à roues indépendantes.

(30) Priorité: 13.05.86 FR 8606825

(43) Date de publication de la demande:
19.11.87 Bulletin 87/47

(45) Mention de la délivrance du brevet:
06.12.89 Bulletin 89/49

(84) Etats contractants désignés:
BE DE ES GB IT SE

(56) Documents cité:
EP-A-0 141 364
DE-A-3 119 777
FR-A-2 426 585

(73) Titulaire: REGIE NATIONALE DES USINES RENAULT, Boîte postale 103 8-10 avenue Emile Zola, F-92109 Boulogne- Billancourt (FR)

(72) Inventeur: Veneau, Jean, 21, rue du Fond Louvet, F-92500 Rueil Malmaison (FR)

(74) Mandataire: Saint Martin, René, Régie Nationale des Usines Renault Direction des Recherches et Développements Service 0804 8-10, Avenue Emile- Zola, F-92109 Boulogne Billancourt Cedex (FR)

## Description

La présente invention se rapporte à un train arrière pour véhicule automobile, du type à roue indépendante et pour lequel le braquage du plan de roue sous effort transversal ou de freinage induit un effet favorable de pincement (DE-A-3 119 777).

On connaît bien les conséquences d'une action de freinage ou d'un coup de vent transversal au véhicule, sur le plan de roue de ce dernier.

La plupart des suspensions du fait de la flexibilité de leurs articulations élastiques, subissent dans les conditions ci-dessus une déformation au cours de laquelle l'avant de la roue arrière se dirige vers l'extérieur du véhicule, c'est-à-dire qu'elle diverge au lieu de rester parallèle à l'axe de ce dernier.

Ce changement de géométrie du train à des effets négatifs tant sur le confort de conduite que sur la tenue de route, provoquant un effet surviveur indésirable.

Le train arrière selon la présente invention à pour but de pallier les inconvénients précédents, en induisant un effet de pincement à la roue arrière concernée sous l'action des efforts transversaux ou de freinage qui s'exercent sur lui. Ce but est atteint par les moyens décrits dans la partie caractérisante des revendications 1 et 2.

L'invention sera maintenant décrite à titre d'exemple non limitatif au regard des figures I à 4 ci-jointes, qui se rapportent respectivement:

— la figure 1, à un schéma vu en plan, d'un train arrière selon l'état de la technique antérieure;
— la figure 2, à une vue en plan d'un train arrière selon la présente invention;
— la figure 3, à une vue arrière du train précédent;
— la figure 4, à une vue en plan d'une variante de l'invention.

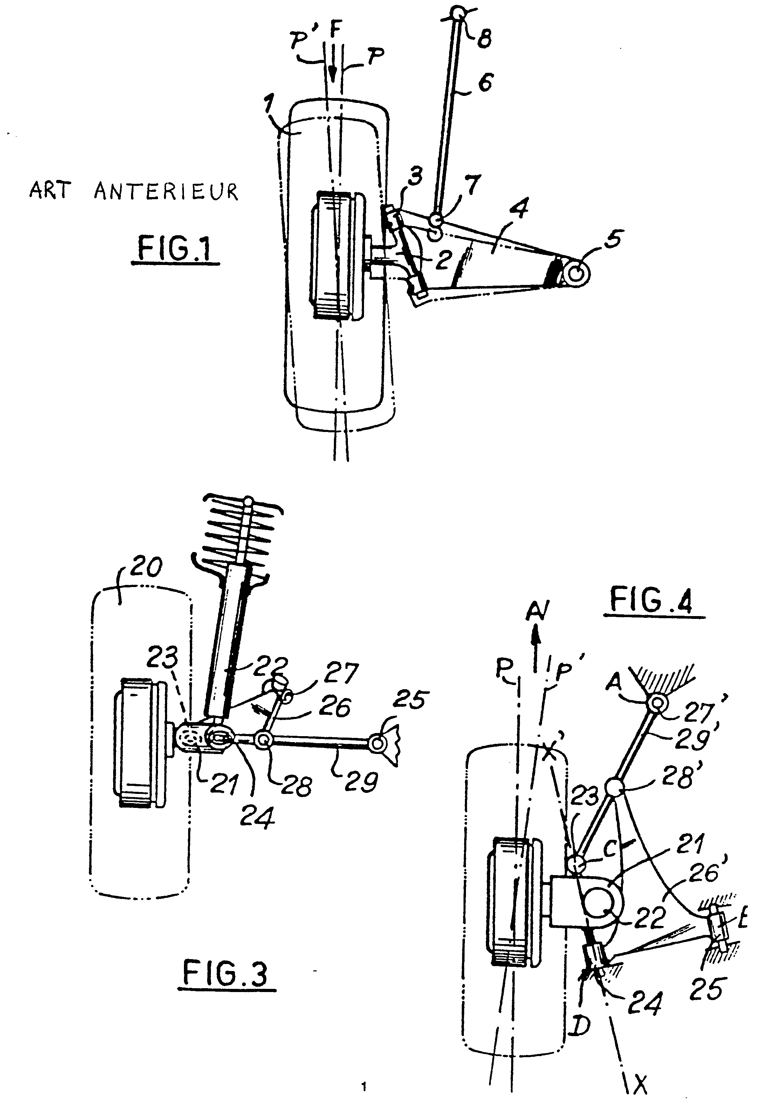

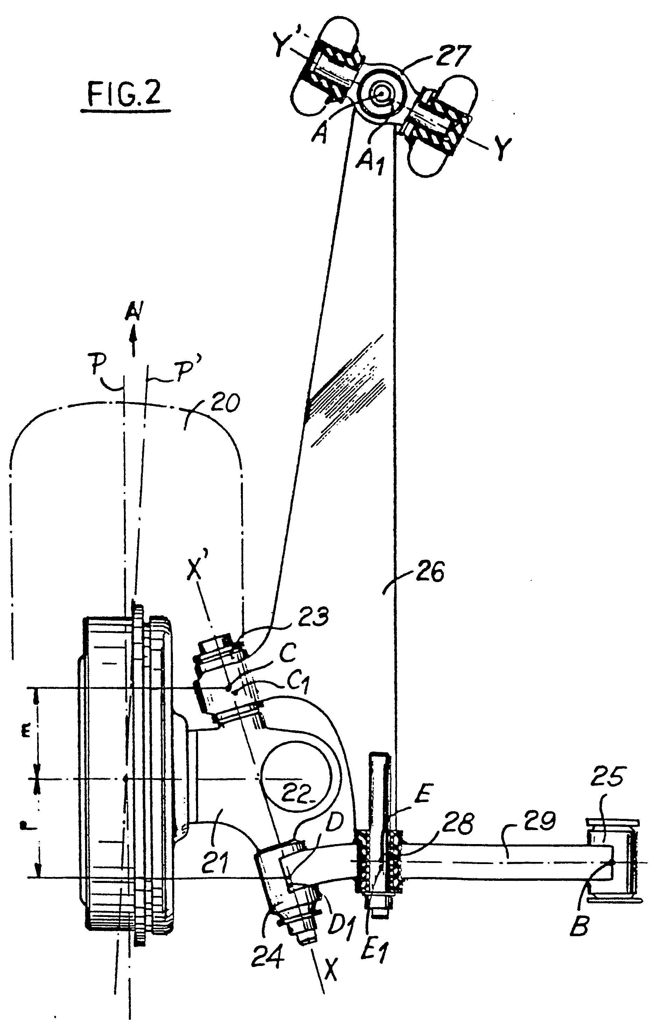

En référence à la figure 1, on voit que la roue 1 est fixée à un porte-fusée 2, sur lequel prend appui une jambe de force supportant la caisse du véhicule et qui aboutit à un axe horizontal incliné 3, autour duquel peut pivoter un bras transversal 4, par ailleurs solidarisé en 5 à la caisse du véhicule.

Un tirant oblique 6 sensiblement horizontal, réunit par les rotules 7 - 8 le bras 4 à la caisse.

Sous l'action d'une force F de freinage, et par le jeu des articulations qu'il comporte, le train précédent se déforme en prenant la position figurée en traits mixtes; on voit que le recul du bras 4 entraîne une inclinaison du plan de la roue 1 dans le sens de sa divergence par rapport au véhicule, lui induisant de ce fait une tendance surviveuse indésirable.

Le train arrière selon l'invention illustré à la figure 2 ne présente pas cet inconvénient.

La roue 20 est fixée à un porte-fusée 21, qui supporte la partie inférieure d'une jambe, de force 22, et comporte à sa base une double articulation 23 - 24, disposée dans un plan sensiblement horizontal de telle façon que la première soit plus proche que la seconde de l'axe de la roue et orientée selon un axe XX divergent par rapport à l'axe longitudinal du véhicule selon un angle généralement compris entre 0° et 40°.

Un bras transversal 29 réunit l'articulation 24 à la caisse grâce à une autre articulation 25 dont l'axe est parallèle à celui du véhicule, tandis qu'un bras triangulaire 26 réunit au moyen de deux de ses sommets l'autre articulation 23 du porte-fusée et la caisse au moyen d'une double articulation 27, à axes orthogonaux situés respectivement dans deux plans horizontal et vertical, le troisième sommet dudit triangle 26 coopérant par une articulation 28, dont l'axe est sensiblement parallèle à celui de l'articulation 25, avec le bras 29 transversal.

Chacune des articulations précédentes est pourvue de façon habituelle d'éléments en élastomères conférant aux pièces à solidariser une certaine latitude de déplacement angulaire relatif.

La disposition des éléments du train ci-dessus et particulièrement l'inclinaison de l'axe horizontal Y'Y de l'articulation 27 détermine un centre instantané de rotation de la roue 20 par rapport au châssis se situant en arrière de l'essieu arrière et à l'extérieur de la voie du véhicule.

Notons encore que l'axe Y'Y situé dans un plan horizontal, de l'articulation 27, fait un angle compris entre 15° et 60° par rapport à l'axe longitudinal du véhicule permettant de remplir la condition ci-dessus; le centre des articulations 27, 25, 23, 24 et 28 est figuré respectivement par les lettres A, B, C, D, E.

La nature de l'élastomère employée dans chacune des articulations varie selon le but à atteindre. Ainsi, l'articulation 23 doit avoir une grande raideur axiale, puisque devant entraîner le bras 26 dans les cinématiques sous effort; au contraire, l'articulation 24 doit posséder une raideur axiale faible, car elle ne participe pas au mouvement du bras, mais doit au contraire permettre, comme on le verra plus loin, une variation de la distance CD dans la cinématique élastique.

De la même façon l'articulation A doit pouvoir se déplacer du fait de son élasticité, suivant Y'Y et osciller autour de l'axe AB pendant le mouvement de pompage de la suspension.

Le triangle ACE constitué par le bras 26 est indéformable: il est moteur dans la cinématique de braquage induit sous effort et agit sur le bras transversal 29 lorsqu'il recule.

Les efforts, longitudinaux ou transversaux, résultant respectivement d'un coup de frein ou de vent transversal, agissent sur le point A et l'amènent en $A_1$.

Ce faisant, le triangle rigide constitué par le bras 26 recule, en provoquant le pivotement du bras transversal 29 autour de B. Le centre des articulations 28, 24 et 23 viennent respectivement en $E_1$, $D_1$ et $C_1$, déterminant de ce fait la rotation recherchée, dans le sens de la pince de l'axe du support de roue CD en $C_1$, $D_1$ provoquant un braquage du plan P de la roue 20 en P'.

Le même effet serait obtenu si la coulisse du type Mac-Pherson était remplacée par un triangle supérieur ou par deux bielles équivalentes.

La variante de la figure 4 diffère de la réalisation précédente au niveau de la jonction du porte-fusée 21 à la caisse, au moyen d'un triangle indéformable 26' et d'un tirant 29', dont les dispositions sont inversées par rapport à la figure 2.

Dans ce cas en effet, l'articulation antérieure 23 est reliée à une rotule 27' solidaire de la caisse par un tirant 29', tandis que l'articulation 25 est solidaire de la caisse par la base d'un bras triangulaire indéformable 26', dont le sommet est fixé sur le tirant 29' par une articulation 28'.

Comme dans le cas précédent, les articulations en cause comportent des éléments en élastomère leur permettant une certaine déformation angulaire et la structure du train détermine un centre instantané de rotation de la roue situé en arrière de l'essieu arrière et à l'extérieur de la voie du véhicule.

Comme dans le cas précédent, un coup de frein exerce son action sur le tirant 29', disposé en avant de l'essieu arrière et commande le recul du triangle EBD qui peut coulisser suivant l'axe AB.

Ce faisant, l'axe CD du support de roue et son plan P sont inclinés dans le sens de la pince en P', avec pour conséquence la tendance sous-vireuse recherchée du véhicule.

## Revendications

1. Train arrière pour suspension de véhicule à roues indépendantes, constitué par un porte-fusée (21) supportant deux articulations (23 - 24) disposées dans un plan sensiblement horizontal et selon un axe X'X divergent vers l'avant par rapport à l'axe longitudinal du véhicule caractérisé par le fait que l'articulation postérieure (24) fixe une extrémité d'un bras transversal (29) réuni à la caisse au moyen d'une articulation (25) parallèle à l'axe longitudinal du véhicule, l'articulation antérieure (23) du porte-fusée servant d'appui à l'un des sommets d'un bras triangulaire (26), dont un autre sommet coopère par une articulation (28), possédant un axe sensiblement parallèle à celui de l'articulation (25), disposée sur le bras transversal (29), le dernier sommet du bras triangulaire (26) étant fixé à la caisse par une double articulation (27) dont un des axes est vertical et l'autre YY' est horizontal et incliné de façon à reporter le centre instantané de rotation de la roue (20) par rapport au châssis en arrière de l'essieu arrière et à l'extérieur de la voie du véhicule.

2. Train arrière pour suspension de véhicule automobile à roues indépendantes, constitué par un porte-fusée (21) supportant deux articulation (23 - 24) disposées dans un plan horizontal et selon axe X'X divergent vers l'avant par rapport à l'axe longitudinal du véhicule caractérisé par le fait que l'articulation antérieure (23) fixe une extrémité d'un tirant (29') dont l'autre aboutit à une rotule (27') solidaire de la caisse, tandis que l'articulation postérieure (24) est reliée à une articulation (25) également solidaire de la caisse, par l'intermédiaire de la base d'un bras triangulaire déformable (26') dont le sommet est fixé au tirant (29') par une articulation (28'), la structure ainsi déterminée permettant le report du centre instantané de rotation de la roue (20) par raport au châssis en arrière de l'essieu arrière et à l'extérieur de la voie du véhicule.

## Patentansprüche

1. Hinterradaufhängung für Kraftfahrzeuge mit unabhängigen Rädern, bestehend aus einem Achsschenkelträger (21) mit zwei Gelenken (23, 24), die in einer im wesentlichen waagrechten Ebene angeordnet sind, entlang einer Achse X, X', die zur Längsachse des Fahrzeugs nach vorne divergiert, dadurch gekennzeichnet, daß am hinteren Gelenk (24) ein Ende eines Querarms (29) befestigt ist, der über ein zur Längsachse des Fahrzeugs paralleles Gelenk (25) mit der Karosserie verbunden ist, daß das vordere Gelenk (23) des Achsschenkelträgers als Stütze dient für eine Ecke eines Dreiecklenkers (26), von dem eine andere Ecke mit einem Gelenk (28) zusammenwirkt, dessen Achse im wesentlichen parallel zu derjenigen des Gelenks (25) ist, das am Querarm (29) befestigt ist und daß die dritte Ecke des Dreiecklenkers (26) an der Karosserie über ein Doppelgelenk (27) befestigt ist, dessen eine Achse senkrecht verläuft und dessen andere Achse Y, Y' derart waagrecht verläuft und geneigt ist, daß das momentane Drehzentrum des Rades (20) bezüglich der Karosserie hinter der Hinterachse und außerhalb der Spurweite des Fahrzeuge liegt.

2. Hinterradaufhängung für Kraftfahrzeuge mit unabhängigen Rädern, bestehend aus einem Achsschenkelträger (21), mit zwei Gelenken (23, 24), die in einer waagrechten Ebene angeordnet sind entlang einer Achse X, X', die nach vorne divergiert bezüglich der Längsachse des Fahrzeugs, dadurch gekennzeichnet, daß am vorderen Gelenk (23) ein Ende einer Koppelstange (29') befestigt ist, deren anderes Ende in einem Gelenklager (27') mündet, das mit der Karosserie verbunden ist, während das hintere Gelenk (24) mit einem Gelenk (25) verbunden ist, das ebenfalls mit der Karosserie verbunden ist mittels des Grundteils eines deformierbaren dreieckigen Arms (26'), dessen eine Ecke an der Koppelstange (29') mittels eines Gelenks (28') befestigt ist, so daß dieser Aufbau eine Verlagerung des momentanen Drehzentrums des Rades (20) bezüglich der Karosserie hinter die Hinterachse und außerhalb der Spurweite des Fahrzeugs bewirkt.

## Claims

1. A rear axle assembly for the independent suspension of a vehicle, consisting of a steering stubaxle (21) carrying two joints (23 - 24) disposed in a substantially horizontal plane and in accordance with an axis (X'X) which diverges forwardly in relation to the longitudinal axis of the vehicle, characterised in that the rear joint (24) fixes one end of a cross-arm (29) connected to the body by means of a joint (25) parallel with the longitudinal axis of the vehicle, the front joint (23) of the steering stub-axle serving to support one of the apieces of a triangular arm (26), of which another apex co-operates by a joint (28) having an axis substantially Parallel with that of the joint (25), disposed on the cross-arm (29), this latter apex of the triangular arm (26) being fixed to the body by a double joint (27) of which one of the axes is vertical while the other (YY') is horizontal and is inclined in such a way as to move the instantaneous centre of rotation of the wheel 20 in relation to the chassis rearwardly of the back axle and towards the outside of the vehicle track.

2. A rear axle assembly for independent motor vehicle suspension, consisting of a steering subaxle (21) carrying two joints (23 - 24) disposed in a horizontal plane and in accordance with an axis (X'X) which diverges forwards in relation to the longitudinal axis of the vehicle, characterised in that the forward joint (23) fixes an end of a rod (29'), of which the other end terminates at a ball-and-socket joint (27') rigid with the body, while the rear joint (24) is connected to another joint (25) which is likewise rigid with the body, through the base of a deformable triangular arm (26') the apex of which is fixed to the rod (29') by a joint (28') the resultant structure making it possible to move the instantaneous centre of rotation of the wheel (20) in relation to the chassis rearwardly of the rear axle and outside the track of the vehicle

ART ANTERIEUR

FIG.1

P' F P

1

3 7 4

2

5

6

8

FIG.3

20

23 22 27 26 25

21 28 29

24

FIG.4

A'

P P'

A

27'

29'

X'

23 28'

C 21

26'

22

E

24

25

D

X

FIG.2